# EUROPÄISCHE PATENTSCHRIFT

(11) **EP 2 835 599 B1**
(45) Veröffentlichungstag und Bekanntmachung des Hinweises auf die Patenterteilung: **04.05.2016**
(21) Anmeldenummer: 14179804.1
(22) Anmeldetag: 05.08.2014
(51) Int. Cl.: F24H 1/43, F24H 9/20, F28D 20/00

(54) **Primärwärmetauscher eines Brennwertheizgerätes**
Primary heat exchanger of a condensing boiler
Échangeur thermique primaire d'un appareil de chauffage à condensation

(30) Priorität: 08.08.2013 AT 6352013
(43) Veröffentlichungstag der Anmeldung: 11.02.2015
(73) Patentinhaber: Vaillant GmbH, 42859 Remscheid (DE)
(72) Erfinder: Wriske, Jochen, 42857 Remscheid (DE); Kupka, Thomas, 51467 Bergisch Gladbach (DE)
(74) Vertreter: Hocker, Thomas

(56) Entgegenhaltungen:
- EP-A1- 0 609 853
- DE-A1- 4 201 972
- DE-A1- 10 033 942
- US-B1- 6 427 638

## Beschreibung

Die Erfindung betrifft einen Primärwärmetauscher eines Brennwertheizgeräts. Brennwertheizgeräte mit Kondensation des Abgases zur Wirkungsgradsteigerung sind aus dem Stand der Technik bekannt. Dabei wird das Abgas eines Heizungsbrenners in einem ersten Wärmetauscher mittels kaltem Rücklaufwassers weiter abgekühlt.

In zentralheizungsbasierten Wärmeversorgungssystemen wird die erzeugte Wärme mittels zirkulierendem Heizungswasser in die Wärmeentnahmestellen (Heizkörper, Fußbodenheizkreise etc.) verteilt. Durch Stell- und Regeleinrichtungen in den einzelnen Räumen kann dabei der Volumenstrom des lokal zirkulierenden Heizungswassers dem momentanen Bedarf angepasst werden. Diese Anpassung geschieht in der Regel durch Drosselorgane, z.B. Thermostatventile im Rohrnetz unmittelbar vor der Wärmeentnahmestelle. Wegen der Parallelschaltung aller Entnahmestellen im Rohrnetz ergibt sich daraus eine Umverteilung des gesamten Volumenstroms auf die einzelnen Entnahmestellen, die aus der Bedingung gleicher Druckdifferenzen in parallel geschalteten Zweigen folgt.

Aus US 4651680 A ist eine Heizung mit zweiteiligem Wärmetauscher bekannt, bei der die im ersten Wärmetauscher abgekühlten Abgase in einem zweiten Wärmetauscher unter den Taupunkt abgekühlt werden. Anschließend gelangen die Abgase in ein Abgasgebläse.

Wesentlich für den sicheren Betrieb einer Anlage, insbesondere eines Gasbrennwertgerätes mit kleinem Wasserinhalt, ist die Gewährleistung eines zirkulierenden Wärmeträgers mit ausreichend hohem Volumenstrom, um einen lokalen Wärmestau im Wärmeerzeuger während Zündung oder Betrieb zu vermeiden.

Hierzu werden Bypass-Ventile eingesetzt, die parallel zur Anlage einen Teilstrom des Heizungswassers vom Vorlauf direkt zum Rücklauf der Anlage leiten, um einen minimalen Umlauf sicherzustellen. Das Bypass-Ventil ist hierbei federbelastet, so dass erst bei Überschreiten eines einstellbaren, minimalen Differenzdrucks in der Anlage dieser parallelgeschaltete Zweig geöffnet und somit der Anlagendruckverlust künstlich verkleinert wird.

Als Nachteilig ist jedoch die Tatsache anzusehen, dass durch das geöffnete Bypass-Ventil erwärmtes Vorlaufwasser direkt in den kalten Anlagenrücklauf fließt und somit die Rücklauftemperatur anhebt. Die Rücklauftemperatur ist jedoch maßgeblich für die Kondensationsrate bei Brennwertgeräten.

Aus der Patentanmeldung EP 2 461 100 A2 ist es bekannt, den Primärwärmetauscher mit einem externen Schichtenspeicher zu verbinden, der die Abgase weiter abkühlt und somit eine zusätzliche Kondensation am Schichtenspeicher bewirkt. Diese Ausführung ist jedoch sehr aufwändig, da zusätzliche Abgasleitungen und Frischluftleitungen erforderlich sind. Zudem sieht die Lehre der EP 2 461 100 A2 keine Lösung des Nachteils vor, wenn bei geöffnetem Bypass-Ventil erwärmtes Vorlaufwasser direkt in den kalten Anlagenrücklauf fließt.

Auch ist es bekannt, einen Wasserspeicher in dem Wärmetauschergehäuse zu integrieren.

Aus der Offenlegungsschrift DE 100 33 942 A1 ist es bekannt, das in einem Heizkreislauf zurücklaufende Wärmeträgermedium zu nutzen, um einen mit dem Primärwärmetauscher verbundenen und mit Brauchwasser gefüllten Warmwasserspeicher zu erwärmen. Diese Lösung weist jedoch keine kompakte Bauweise auf. Gleiches gilt für einen in der Offenlegungsschrift DE 42 01 972 A1 Warmwasserspeicher, bei dem das in einem Heizkreislauf zurücklaufende Wärmeträgermedium zunächst in einem Primärwärmetauscher erwärmt wird und anschließend wärmetauscherseitig durch den Warmwasserspeicher geführt wird, so dass dort gespeichertes Brauchwasser erwärmt wird.

Es ist daher Aufgabe der Erfindung, einen gattungsgemäßen Primärwärmetauscher so zu verbessern, dass er kompakt und mit geringem Wasservolumen ausgeführt sein kann und dennoch auch bei geöffnetem Bypass-Ventil keinen schlechteren Wirkungsgrad aufweist.

Diese Aufgabe wird durch ein Brennwert-Heizgerät mit einem Primärwärmetauscher gemäß den Merkmalen des unabhängigen Anspruchs gelöst. Insbesondere kann hierbei bei dem der Primärwärmetauscher zusätzlich einen in dem Primärwärmetauscher integrierten Schichtenspeicher umfasst sichergestellt werden, dass bei geöffnetem Bypass-Ventil noch eine gewisse Zeit kaltes Wasser für die Kondensation im Brennwertbetrieb zur Verfügung steht.

Vorteilhafte Ausgestaltungen ergeben sich durch die Merkmale der abhängigen Ansprüche.

Bei einem Verfahren zum Betreiben des erfindungsgemäßen Brennwert-Heizgeräts wird die Tatsache, dass der Schichtenspeicher kaltes und warmes Wasser trennt, genutzt. Nach Öffnen des Bypasses wird das Wärmetauscherelement zunächst noch eine gewisse Zeit mit kaltem Wasser versorgt. Erst wenn die Temperatur des aus dem Schichtenspeicher zulaufenden Wassers eine Temperatur übersteigt, die keine Kondensation ermöglicht, wird der Brenner abgeschaltet, und wieder eingeschaltet, wenn die Temperatur am Ausgang des Schichtenspeichers oder am Rücklauf des Heizkreises abgesunken ist.

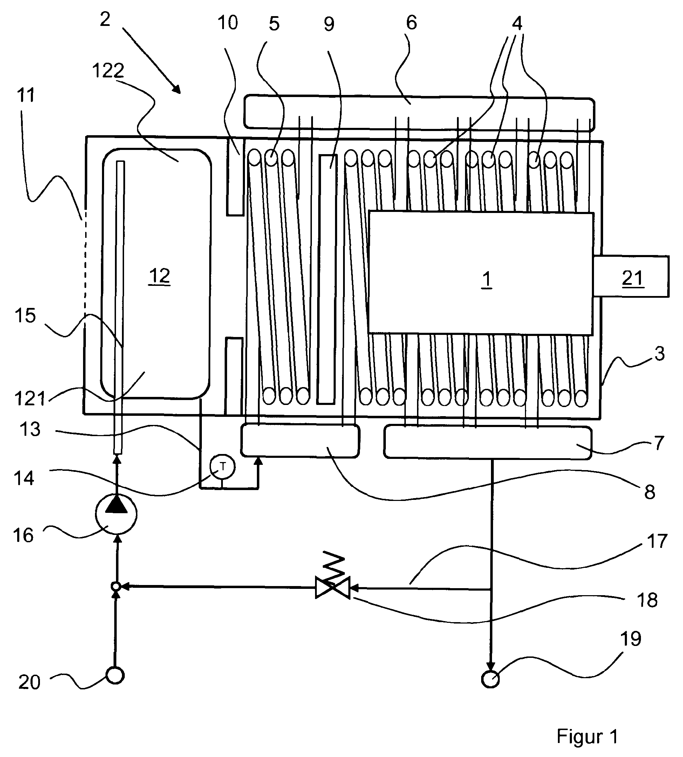

Die Erfindung wird nun anhand der Figur detailliert erläutert. Figur 1 zeigt schematisch einen Ausschnitt eines erfindungsgemäßen Brennwert-Heizgeräts. Dargestellt ist der Primärwärmetauscher 2, der mit einem Brenner 1 verbunden ist. Der Brenner 1 wird von einer Gasgemischzufuhr 21 mit einem brennbaren Gasgemisch versorgt. Die heißen Abgase bzw. die Flammen des Brenners 1, nachfolgend als Heißgas bezeichnet, werden durch den Primärwärmetauscher 2 geführt, welcher von einem Wärmetauschergehäuse 3 umgeben ist. Der Primärwärmetauscher 2 umfasst ein erstes und ein zweites Wärmetauscherelement 4, 5, wobei eine erste und zweite Umlenkung 9, 10 das Heißgas vom Brenner 1 kommend so umlenken, dass zuerst das erste Wärmetauscherelement 4 vom Heißgas erwärmt wird und anschließend das zweite Wärmetauscherelement 5. Zuletzt wird das Heißgas an einem kleinen Schichtenspeicher 12 vorbei geleitet, wobei das Heißgas seine restliche Wärme an den Schichtenspeicher 12 abgibt, bevor das Heißgas über den Abgasausgang 11 das Wärmetauschergehäuse 3 verlässt. Erfindungsgemäß können auch ein einziges Wärmetauscherelement oder auch mehr als 2 Wärmetauscherelemente vorgesehen sein. Erfindungsgemäß ist der Schichtenspeicher 12 innerhalb des primären Wärmetauschers 2 vorgesehen und ist zusammen mit dem Wärmetauscherelementen 4, 5 von einem gemeinsamen Wärmetauschergehäuse 3 umgeben. Dadurch wird das Heißgas hinter den Wärmetauscherelementen 4, 5 direkt und ohne über externe Leitungen geführt zu werden, dem Schichtenspeicher 12 zugeführt. Der Schichtenspeicher 12 hat einerseits den Vorteil, dass er über seiner Oberfläche die Funktion eines zusätzlichen Wärmetauschers wahrnimmt. Andererseits stellt der Schichtenspeicher ein Puffervolumen für den Primärwärmetauscher dar. Aufgrund der Temperaturschichtung des Schichtenspeichers ist dieses Puffervolumen effektiver als eine Vergrößerung des Wasservolumens in den Wärmetauscherelementen. Dadurch kann der Primärwärmetauscher insgesamt kleiner ausgeführt werden.

Der Primärwärmetauscher gibt die Wärme des Heißgases an einen Kreislauf mit einem Wärmeträgermedium, zumeist Wasser, ab. Hierzu fördert eine Pumpe 16 das Wärmeträgermedium vom Rücklauf 20 kommend zunächst über den Schichtenspeichereingang 15 in die warme Schicht 122 des Schichtenspeichers 12 ein. Der Schichtenspeicherausgang 13 ist mit der kalten Schicht 121 des Schichtenspeichers 12 verbunden. Diese Anordnung ist genau andersherum als bei Schichtenspeicher, die für eine Warmwasserspeicherung für Brauchwasser vorgesehen sind. Daraus ergeben sich Vorteile, die nachfolgend beschriebenen werden. Der Schichtenspeicherausgang 13 ist mit einem Temperatursensor 14 verbunden, der die Temperatur am Schichtenspeicherausgang sensiert. Anschließend wird das Wärmeträgermedium über eine erste Verbindung 8 in das zweite Wärmetauscherelement 5 geleitet, von wo aus es über eine zweite Verbindung 6 in das erste Wärmetauscherelement 4 geleitet wird. In diesem Beispiel werden die Wärmetauscherelemente 4, 5 durch eine oder mehrere parallel oder miteinander geschaltete spiralförmige Rohre gebildet. Es sind auch andere Konfigurationen der Wärmetauscherelemente möglich und erfindungsgemäß eingeschlossen. Über eine dritte Verbindung 7 wird das Wärmeträgermedium dem Vorlauf 19 zugeführt. Vorlauf 19 und Rücklauf 20 sind mit einem Heizkreis oder einer Brauchwassererwärmung verbunden, die die Wärmesenke darstellen.

Für den Fall, dass beispielsweise alle Heizkörper-Thermostatventile des Heizkreises geschlossen sind, ist eine Bypassleitung 17 mit einem Überdruckventil 18 vorgesehen. Das Verschließen der Thermostatventile führt zu einem Druckanstieg, so dass das Überdruckventil 18 öffnet. Nun fließt zumindest ein Teilstrom des durch die Pumpe 16 umgewälzten Wärmeträgermedium direkt vom Ausgang des Primärwärmetauschers 2, der dritten Verbindung 7 zurück zum Eingang des Primärwärmetauschers 2, dem Schichtenspeichereingang 15. Wäre der Schichtenspeicher 12 nicht vorgesehen, so würde das warme Wärmeträgermedium direkt in das zweite Wärmetauscherelement geleitet, was sich dadurch erwärmt, womit eine verminderte Kondensationsrate des Brennwert- Heizgeräts verbunden ist. Dies soll erfindungsgemäß verhindert werden, indem das warme rücklaufende Wärmeträgermedium in der warmen Schicht 122 des Schichtenspeichers 12 eingelagert wird. In der kalten Schicht 121 des Schichtenspeichers 12 ist eine Menge an kaltem Wärmeträgermedium gespeichert, die bewirkt, dass weiterhin das zweite Wärmetauscherelement 5 mit ausreichend kaltem Wärmeträgermedium versorgt wird. Dabei wird die Temperatur des Wärmeträgermedium über den Temperatursensor 14 erfasst. Sobald die Temperatur einen Schwellenwert überschreitet, der eine Kondensation im zweiten Wärmetauscherelement nicht mehr sicherstellt, wird erfindungsgemäß der Brenner 1 abgeschaltet. Dennoch ist im Schichtenspeicher 12 genügend warmes Wärmeträgermedium gespeichert, so dass die Wärmesenke über den Vorlauf 19 über eine gewisse Zeitspanne mit warmem Wärmeträgermedium versorgt werden kann. Erst wenn die Temperatur entweder am Schichtenspeicherausgang 13, welche dort über den Temperatursensor 14 erfasst wird, oder beispielsweise am Rücklauf 20 durch einen hier nicht dargestellten Temperatursensor einen zweiten Schwellenwert unterschreitet, wird der Brenner 1 wieder gestartet.

### Bezugszeichenliste

- 1: Brenner
- 2: Primärwärmetauscher
- 3: Wärmetauschergehäuse
- 4: Erstes Wärmetauscherelement
- 5: Zweites Wärmetauscherelement
- 6: Zweite Verbindung
- 7: Dritte Verbindung
- 8: Erste Verbindung
- 9: Erste Umlenkung
- 10: Zweite Umlenkung
- 11: Abgasausgang
- 12: Schichtenspeicher
- 13: Schichtenspeicherausgang
- 14: Temperatursensor
- 15: Schichtenspeichereingang
- 16: Pumpe
- 17: Bypassleitung
- 18: Ventil
- 19: Vorlauf
- 20: Rücklauf
- 21: Gasgemischzufuhr
- 121: Kalte Schicht
- 122: Warme Schicht

## Patentansprüche

1. Brennwert-Heizgerät, umfassend einen Brenner (1) und einen Primärwärmetauscher (2) zum Übertragen der Wärme vom Abgas des Brenners (1) auf einen Kreislauf mit einem Wärmeträgermedium, wobei der Primärwärmetauscher (2) zumindest ein Wärmetauscherelement (4, 5) umfasst, das in einem Wärmetauschergehäuse (3) vorgesehen ist, welches die Abgase des Brenners (1) führt, wobei eine Pumpe (16) am Ein- oder Ausgang für das Wärmeträctermedium des Primärwärmetauschers (2) vorgesehen ist und wobei eine Bypassleitung (17) parallel zur Pumpe (16) und zum Primärwärmetauscher (2) angeordnet ist, und wobei das Wärmetauscherelement (4, 5) mit einem Schichtenspeicher (12) verbunden ist, der innerhalb des Wärmetauschergehäuses (3) vorgesehen ist, **dadurch gekennzeichnet, dass** das Wärmetauschergehäuse (3) so ausgeführt ist, dass der Schichtenspeicher unmittelbar an das Wärmetauscherelement (4, 5) angrenzt, dass das Wärmetauscherelement (4, 5) über eine Verbindung (8) mit einem Schichtenspeicherausgang (13) des Schichtenspeichers (12) verbunden ist und dass der Eingang des Primärwärmetauschers (2) für das Wärmeträgermedium so mit der warmen Schicht (122) des Schichtenspeichers (12) und das Wärmetauscherelement (5) mit der kalten Schicht (121) des Schichtenspeichers (12) verbindbar ist, so dass das rücklaufende Wärmeträgermedium in der warmen Schicht (122) eingelagert wird.

2. Brennwert-Heizgerät nach Anspruch 1, wobei der Schichtenspeicher (12) und das Wärmetauscherelement (4, 5) in Strömungsrichtung des Wärmeträgermediums gesehen hintereinander angeordnet sind.

3. Brennwert-Heizgerät nach Anspruch 1 oder 2, wobei der Primärwärmetauscher (2) ein erstes Wärmetauscherelement (4) und ein zweites Wärmetauscherelement (5) umfasst, wobei das zweite Wärmetauscherelement (5) in Strömungsrichtung des Abgases hinter dem ersten Wärmetauscherelement (4) angeordnet ist.

4. Brennwert-Heizgerät nach einem der vorhergehenden Ansprüche, wobei ein Temperatursensor (14) zwischen dem Schichtenspeicher (12) und dem Wärmetauscherelement (4, 5) vorgesehen ist.

5. Brennwert-Heizgerät nach einem der vorhergehenden Ansprüche, wobei der Schichtenspeicher (12) in Strömungsrichtung des Abgases hinter dem Wärmetauscherelement (4, 5) angeordnet ist.

6. Verfahren zum Betreiben eines Brennwert-Heizgeräts nach einem der Ansprüche 1 bis 5, wobei das Wärmeträgermedium mittels des Primärwärmetauschers (2) durch die Abgase des Brenners (1) erwärmt und mittels der Pumpe (16) gefördert wird, und wobei ein Ventil (18) der Bypassleitung (17) bei Überschreiten einer vorgegebenen Druckdiffererenz am Ventil (18) geöffnet wird, **dadurch gekennzeichnet, dass** der Brenner (1) abgeschaltet wird, wenn die Temperatur zwischen dem Schichtenspeicher (12) und dem Wärmetauscherelement (4, 5) einen Schwellenwert überschreitet, bei dem keine Kondensation mehr oder nur noch eine verminderte Kondensation des Abgases am Wärmetauscherelement (4, 5) erfolgt, und dass der Brenner (1) wieder gestartet wird, wenn die Temperatur zwischen dem Schichtenspeicher (12) und dem Wärmetauscherelement (4, 5) oder am Rücklauf (20) einen zweiten Schwellenwert unterschreitet.

## Claims

1. Condensing heating appliance, comprising a burner (1) and a primary heat exchanger (2) for transferring the heat from the exhaust gas of the burner (1) to a circuit having a heat transfer medium, the primary heat exchanger (2) comprising at least one heat exchanger element (4, 5) which is provided in a heat exchanger housing (3) that guides the exhaust gases from the burner (1), wherein a pump (16) is provided at the inlet or outlet for the heat transfer medium of the primary heat exchanger (2) and wherein a bypass line (17) is arranged parallel to the pump (16) and to the primary heat exchanger (2), and wherein the heat exchanger element (4, 5) is connected to a stratified storage means (12) which is provided inside the heat exchanger housing (3), **characterised in that** the heat exchanger housing (3) is configured such that the stratified storage means is immediately adjacent to the heat exchanger element (4, 5), **in that** the heat exchanger element (4, 5) is connected to a stratified storage means outlet (13) from the stratified storage means (12) via a connection (8) and **in that** the inlet to the primary heat exchanger (2) for the heat transfer medium can be connected to the warm layer (122) of the stratified storage means (12) and the heat exchanger element (5) can be connected to the cold layer (121) of the stratified storage means (12) in such a way that the returning heat transfer medium is stored in the warm layer (122).

2. Condensing heating appliance according to claim 1, wherein the stratified storage means (12) and the heat exchanger element (4, 5) are arranged one behind the other, viewed in the direction of flow of the heat transfer medium.

3. Condensing heating appliance according to claim 1 or 2, wherein the primary heat exchanger (2) comprises a first heat exchanger element (4) and a second heat exchanger element (5), the second heat exchanger element (5) being arranged behind the first heat exchanger element (4) in the direction of flow of the exhaust gas.

4. Condensing heating appliance according to one of the preceding claims, wherein a temperature sensor (14) is provided between the stratified storage means (12) and the heat exchanger element (4, 5).

5. Condensing heating appliance according to one of the preceding claims, wherein the stratified storage means (12) is arranged behind the heat exchanger element (4, 5) in the direction of flow of the exhaust gas.

6. Method of operating a condensing heating appliance according to one of claims 1 to 5, wherein the heat transfer medium is heated by the exhaust gases from the burner (1) by means of the primary heat exchanger (2) and is conveyed by the pump (16), and wherein a valve (18) of the bypass line (17) is opened when a pre-defined pressure difference is exceeded at the valve (18), **characterised in that** the burner (1) is switched off when the temperature between the stratified storage means (12) and the heat exchanger element (4, 5) exceeds a threshold value at which there is no further condensation or only a reduced condensation of the exhaust gas at the heat exchanger element (4, 5), and **in that** the burner (1) is started up again when the temperature between the stratified storage means (12) and the heat exchanger element (4, 5) or on the return run (20) falls below a second threshold value.

## Revendications

1. Appareil de chauffage à condensation, comprenant un brûleur (1) et un échangeur thermique primaire (2) pour transmettre la chaleur du gaz d'échappement du brûleur (1) à un circuit avec un fluide caloporteur, dans lequel l'échangeur thermique primaire (2) comprend au moins un élément échangeur thermique (4, 5) qui est prévu dans un coffret d'échangeur thermique (3) qui conduit les gaz d'échappement du brûleur (1), dans lequel une pompe (16) est prévue au niveau de l'entrée ou de la sortie pour le fluide caloporteur de l'échangeur thermique primaire (2), dans lequel une conduite de dérivation (17) est branchée en parallèle de la pompe (16) et de l'échangeur thermique primaire (2) et dans lequel l'élément échangeur thermique (4, 5) est relié à un accumulateur stratifié (12) qui est prévu à l'intérieur du coffret d'échangeur thermique (3),
**caractérisé en ce que** le coffret d'échangeur thermique (3) est réalisé de telle sorte que l'accumulateur stratifié est directement adjacent à l'élément échangeur thermique (4, 5), que l'élément échangeur thermique (4, 5) est relié par l'intermédiaire d'une liaison (8) à une sortie d'accumulateur stratifié (13) de l'accumulateur stratifié (12) et que l'entrée de l'échangeur thermique primaire (2) pour le fluide caloporteur peut être reliée de telle sorte à la couche chaude (122) de l'accumulateur stratifié (12) et l'élément échangeur de chaleur (5) peut être relié de telle sorte à la couche froide (121) de l'accumulateur stratifié (12) que le fluide caloporteur dans le trajet de retour est stocké dans la couche chaude (122).

2. Appareil de chauffage à condensation selon la revendication 1, dans lequel l'accumulateur stratifié (12) et l'élément échangeur thermique (4, 5) sont agencés l'un derrière l'autre, vus dans le sens d'écoulement du fluide caloporteur.

3. Appareil de chauffage à condensation selon la revendication 1 ou 2, dans lequel l'échangeur thermique primaire (2) comprend un premier élément échangeur thermique (4) et un deuxième élément échangeur thermique (5), le deuxième élément échangeur thermique (5) étant agencé derrière le premier élément échangeur thermique (4) dans le sens d'écoulement du gaz d'échappement.

4. Appareil de chauffage à condensation selon l'une des revendications précédentes, dans lequel un capteur de température (14) est prévu entre l'accumulateur stratifié (12) et l'élément échangeur thermique (4, 5).

5. Appareil de chauffage à condensation selon l'une des revendications précédentes, dans lequel l'accumulateur stratifié (12) est agencé derrière l'élément échangeur thermique (4, 5) dans le sens d'écoulement du gaz d'échappement.

6. Procédé de fonctionnement d'un appareil de chauffage à condensation selon l'une des revendications 1 à 5, selon lequel le fluide caloporteur est chauffé au moyen de l'échangeur thermique primaire (2) par les gaz d'échappement du brûleur (1) et est transporté au moyen de la pompe (16) et selon lequel une soupape (18) de la conduite de dérivation (17) est ouverte lors du dépassement d'une différence de pression prédéterminée au niveau de la soupape (18), **caractérisé en ce que** l'on arrête le brûleur (1) lorsque la température entre l'accumulateur stratifié (12) et l'élément échangeur thermique (4, 5) devient supérieure à une valeur de seuil pour laquelle ne se produit plus aucune condensation ou seulement une condensation réduite du gaz d'échappement au niveau de l'élément échangeur thermique (4, 5) et **en ce que** l'on redémarre le brûleur (1) lorsque la température entre l'accumulateur stratifié (12) et l'élément échangeur thermique (4, 5) ou au niveau du retour (20) devient inférieure à une deuxième valeur de seuil.
